# FASCICULE DE BREVET EUROPEEN

(11) **EP 1 722 119 B1**
(45) Date de publication et mention de la délivrance du brevet: **25.02.2009**
(21) Numéro de dépôt: 06113522.4
(22) Date de dépôt: 04.05.2006
(51) Int. Cl.: F16D 23/12

(54) **Dispositif pour l'assistance au déplacement d'un moyen d'actionnement et ensemble d'assistance pour système de commande d'embrayage, notamment de véhicule automobile**
Vorrichtung zur Hilfe der Verstellung eines Betätigungsmittels und Hilfsanordnung für ein Kupplungsbetätigungssystem, insbesondere für Kraftfahrzeuge
Device for assisting the displacement of an actuating device and assistance assembly for actuation device of a coupling, especially for a motor vehicle

(30) Priorité: 11.05.2005 FR 0551220
(43) Date de publication de la demande: 15.11.2006
(73) Titulaire: Valeo Embrayages, 80000 Amiens Cedex 1 (FR)
(72) Inventeur: Lebas, Gilles, 80800, Villers Bretonneux (FR); Maurel, Hervé, 80000, Amiens (FR); Delevallee, Jean-Louis, 80000, Amiens (FR)
(74) Mandataire: Doressamy, Clarisse

(56) Documents cités:
- DE-A1- 3 806 642
- GB-A- 1 339 327
- GB-A- 2 313 885
- US-B1- 6 213 271

## Description

La présente invention concerne un dispositif pour l'assistance au déplacement d'un moyen d'actionnement et un ensemble d'assistance pour système de commande d'embrayage, notamment de véhicule automobile.

Un dispositif d'embrayage de véhicule automobile est généralement actionné à l'aide d'une pédale de commande d'embrayage accessible depuis un habitacle du véhicule. Il est connu de relier cette pédale de commande au dispositif d'embrayage par un système de commande, notamment hydraulique. On peut, de manière connue, remplacer la pédale par un actionneur, notamment électro-mécanique.

On constate que l'évolution des moteurs automobiles conduit à augmenter le couple transmis par l'embrayage et par là même à augmenter l'effort à la pédale. Des systèmes d'assistance ont été développés pour réduire cet effort.

Une solution connue pour minimiser l'effort qu'un utilisateur doit appliquer sur la pédale de commande pour actionner l'embrayage consiste à ajouter à un système de commande hydraulique un ensemble d'assistance encore appelle "cylindre d'asslstance". Ce cylindre d'assistance comporte un piston de commande hydraulique d'embrayage, mobile axialement dans un corps de cylindre, et un dispositif d'assistance au déplacement axial de ce piston.

On connait déjà dans l'état de la technique, notamment d'après DE 3 806 642, un dispositif conforme au preambule de la revendication 1.

On connaît également dans l'état de la technique, notamment d'après US-A-6 213 271, un disposif, pour système de commande hydraulique d'embrayage de véhicule automobile, pour l'assistance au déplacement axial dans un sens prédéterminé d'un piston mobile dans un corps, ce dispositif étant du type comprenant un organe de renvoi d'effort lié axialement avec le piston et des premier et second organes d'application d'effort appliquant des premier et second efforts élastiques sur l'organe de renvoi, ces premier et second efforts élastiques comportant respectivement des première et seconde composantes opposées transversales à la direction de déplacement du piston.

Dans le dispositif d'assistance selon US-A-6 213 271, les composantes transversales des premier et second efforts élastiques ne se compensent pas complètement, si bien que le piston subit un effort transversal générant des frottements entre le piston et le corps dans lequel se déplace le piston. Ces frottements limitent l'efficacité du dispositif d'assistance.

L'invention a notamment pour but de limiter de tels frottements. Elle s'applique à des ensembles d'assistance pour système de commande hydraulique, et plus généralement à tout ensemble d'assistance au déplacement axial, dans un sens prédéterminé, d'un moyen d'actionnement.

A cet effet, l'invention a pour objet un dispositif pour système de commande d'embrayage de véhicule automobile, pour l'assistance au déplacement axial dans un sens prédéterminé d'un moyen d'actionnement, ce dispositif étant du type comprenant un organe de renvoi d'effort lié axialement avec le moyen d'actionnement et des premier et second organes d'application d'effort appliquant des premier et second efforts élastiques sur l'organe de renvoi, où les premier et second organes d'application d'effort sont reliés à un support commun, ces premier et second efforts élastiques comportant respectivement des première et seconde composantes opposées transversales à la direction de déplacement du moyen d'actionnement, où les premier et second efforts élastiques sont créés par au moins un premier organe élastique reliant le premier organe d'application d'effort au support et où un élément choisi parmi l'organe de renvoi et le support est mobile en translation transversalement par rapport au moyen d'actionnement.

Ainsi, tout déséquilibre des composantes transversales des premier et second efforts élastiques entraîne automatiquement l'élément mobile en translation vers une position d'équilibre dans laquelle les composantes transversales des premier et second efforts élastiques se compensent. On limite ainsi efficacement les frottements entre le moyen d'actionnement et le corps dans lequel se déplace le moyen d'actionnement.

Un dispositif d'assistance selon l'invention peut en outre comporter l'une ou plusieurs des caractéristiques suivantes :
- le premier organe d'application d'effort coopère avec l'organe de renvoi par effet de came de façon à transformer un déplacement du premier organe d'application en déplacement du moyen d'actionnement dans le sens prédéterminé ;
- les premier et second organes d'application d'effort coopèrent chacun avec l'organe de renvoi par effet de came de façon à transformer chaque déplacement d'organe d'application en déplacement du moyen d'actionnement dans le sens prédéterminé ;
- l'organe de renvoi comporte une extrémité axiale d'attente telle que lorsque les organes d'application d'effort coopèrent avec cette extrémité d'attente, l'effet de came est annulé ;
- les premier et second efforts élastiques sont créés par le premier organe élastique reliant le premier organe d'application au support et un second organe élastique reliant le second organe d'application au support ;
- l'organe de renvoi est monté avec un jeu transversal sur une tige du moyen d'actionnement et le support est fixe transversalement par rapport au moyen d'actionnement ;
- le dispositif d'assistance comporte des moyens de guidage transversal de l'organe de renvoi par rapport à la tige du moyen d'actionnement, ces moyens de guidage transversal comportant des moyens de limitation de frottements, par exemple des moyens de roulement ou des moyens de glissement ;
- le support est mobile transversalement par rapport au moyen d'actionnement et l'organe de renvoi est fixe transversalement par rapport au moyen d'actionnement ;
- au moins l'un des organes d'application d'effort comporte un galet d'application d'effort coopérant avec l'organe de renvoi ;
- au moins l'un des organes d'application d'effort comporte un galet de réaction coopérant avec une surface de réaction pour s'opposer au déplacement de cet organe d'application d'effort dans un sens opposé au sens prédéterminé ;
- un ensemble comprenant le support, les organes d'application d'effort et chaque organe élastique est guidé transversalement par coopération de chaque galet de réaction avec la surface de réaction ;
- les galets d'application d'effort et de réaction sont montés pivotant autour d'axes perpendiculaires à la direction de déplacement du moyen d'actionnement et coplanaires dans un plan parallèle à cette direction de déplacement du moyen d'actionnement ;
- le premier organe élastique est un ressort de compression en appui entre le support et le premier organe d'application d'effort ;
- le premier organe élastique est un ressort à lame comportant une première extrémité liée à un premier support, une seconde extrémité liée au premier organe d'application d'effort, et une partie centrale liée à un second support ;
- un support choisi parmi les premier et second supports est mobile transversalement par rapport au moyen d'actionnement, et l'autre est fixe transversalement par rapport à ce moyen d'actionnement ;
- le second support est fixe par rapport au moyen d'actionnement, la partie centrale de chaque organe élastique prenant appui sur le second support par l'intermédiaire d'un organe d'articulation intercalé entre l'organe élastique et le second support ;
- les organes d'articulation peuvent glisser parallèlement à la direction de déplacement du moyen d'actionnement sur des faces correspondantes ménagées sur le second support ;le moyen d'actionnement est un piston ;
- le moyen d'actionnement est un élément de tringlerie, notamment une tige ou un câble.

L'invention a également pour objet un ensemble d'assistance pour système de commande hydraulique d'embrayage, notamment de véhicule automobile, du type comprenant un piston, et un dispositif d'assistance au déplacement axial de ce piston, où le dispositif d'assistance est tel que défini ci-dessus.

Cet ensemble d'assistance peut en outre comporter l'une et/ou l'autre des caractéristiques suivantes :
- le piston délimite une chambre émettrice de volume variable ;
- le piston délimite une chambre réceptrice de volume variable.

L'invention a également pour objet un système de commande d'embrayage, notamment de véhicule automobile, du type comprenant un élément de tringlerie, notamment une tige ou un câble, et un dispositif d'assistance au déplacement axial de cet élément de tringlerie.

L'invention sera mieux comprise à la lecture de la description qui va suivre, donnée uniquement à titre d'exemple et faite en se référant aux dessins annexés dans lesquels :
- la figure 1 est une vue en coupe axiale d'un ensemble d'assistance comportant un dispositif d'assistance au déplacement d'un piston selon un premier mode de réalisation de l'invention, le piston étant dans une position d'attente ;
- la figure 2 est une vue sensiblement similaire à celle de la figure 1 dans laquelle le piston est dans une position de fin de course ;
- la figure 3 est une vue sensiblement similaire à celle de la figure 2 d'un dispositif d'assistance selon un deuxième mode de réalisation de l'invention, le piston étant dans une position d'attente ;
- la figure 4 est une vue sensiblement similaire à celle de la figure 1 d'un ensemble d'assistance comportant un dispositif d'assistance selon un troisième mode de réalisation de l'invention ;
- la figure 5 est une vue sensiblement similaire à celle de la figure 1 d'un ensemble d'assistance comportant un dispositif d'assistance selon un quatrième mode de réalisation de l'invention ;
- la figure 6 est une vue en perspective, avec une en coupe axiale, d'un ensemble d'assistance comportant un dispositif d'assistance selon un cinquième mode de réalisation de l'invention ;
- la figure 7 est une vue sensiblement similaire à celle de la figure 6 d'un ensemble d'assistance comportant un dispositif d'assistance selon un sixième mode de réalisation de l'invention ;
- la figure 8 est une vue sensiblement similaire à celle de la figure 6 d'un ensemble d'assistance comportant un dispositif d'assistance selon un septième mode de réalisation de l'invention.

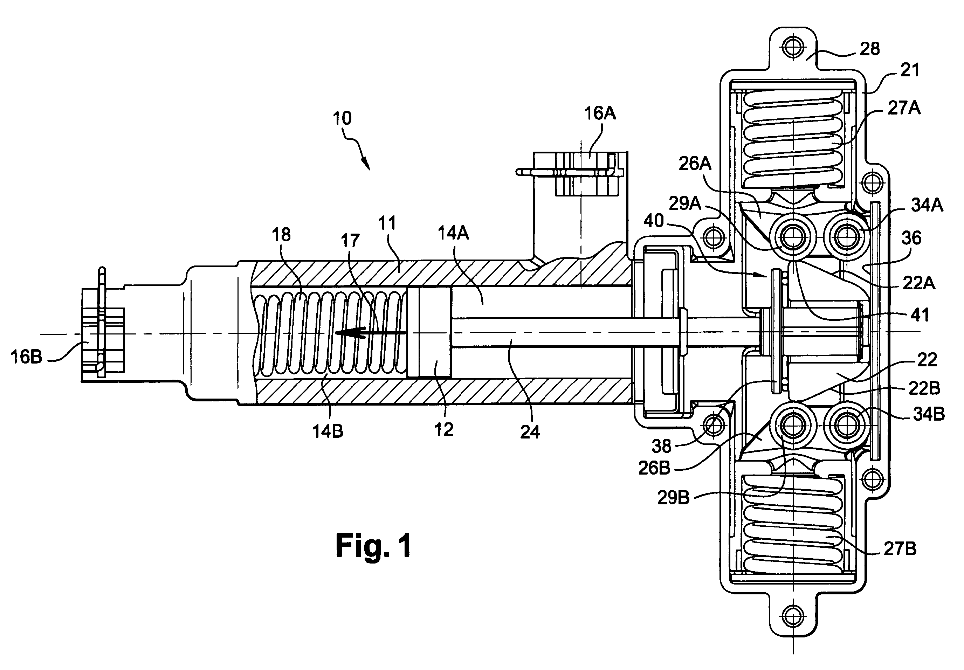

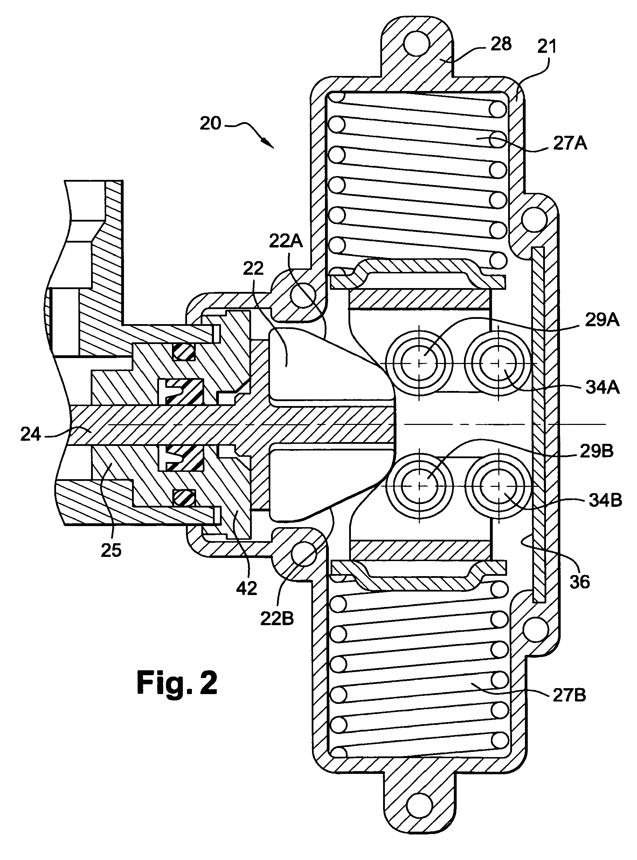

On a représenté sur les figures 1 et 2 un ensemble d'assistance, appelé par la suite cylindre d'assistance 10, destiné à être agencé dans un système de commande hydraulique d'un embrayage de véhicule automobile.

Le cylindre d'assistance 10 est muni d'un corps 11, de forme générale tubulaire, dans lequel est monté coulissant axialement un piston 12. Ce piston 12 cloisonne le corps 11 en des première 14A et seconde 14B chambres de volumes variables reliées respectivement, via des premier et second circuits hydrauliques, à une pédale de commande d'embrayage et à un dispositif d'embrayage classiques (non représentés). Les première 14A et seconde 14B chambres sont munies respectivement de premier 16A et second 16B orifices pour l'entrée et la sortie d'un liquide de transmission, par exemple une huile classique.

Lorsque la pédale de commande d'embrayage est actionnée, du liquide de transmission entre dans la chambre 14A par l'orifice 16A, poussant ainsi axialement le piston 12 dans un sens prédéterminé 17 jusqu'à une position de fin de course telle que représentée sur la figure 2. Cette chambre 14A est dénommée chambre réceptrice.

Par analogie, la chambre 14B est dénommée chambre émettrice.

Lorsque la pédale de commande d'embrayage est relâchée, le dispositif d'embrayage est rappelé en position embrayée.

Ce dispositif d'embrayage exerce alors un effort hydraulique de rappel sur le piston 12, qui est ainsi rappelé dans un sens opposé au sens prédéterminé 17 jusqu'à une position d'attente telle que représentée sur la figure 1.

Le cylindre d'assistance 10 comporte également un organe élastique de rappel 18, généralement un ressort de compression, permettant d'achever la course de rappel du piston 12.

Afin de minimiser l'effort devant être appliqué par l'utilisateur à la pédale de commande pour actionner le dispositif d'embrayage, le cylindre d'assistance 10 comporte un dispositif 20 d'assistance au déplacement axial du piston 12 dans le sens prédéterminé 17.

Le dispositif d'assistance 20 est représenté conformément à un premier mode de réalisation de l'invention sur les figures 1 et 2. Sur ces figures, on voit que le dispositif d'assistance 20 comporte un carter 21, raccordé à une extrémité du corps 11, dans lequel est logé un organe 22 de renvoi d'effort, lié axialement à une tige 24 solidaire du piston 12.

On notera que la tige 24 du piston 12 est guidée axialement par un organe 25 de guidage axial agencé dans le carter 21, dans laquelle cette tige 24 coulisse axialement (voir figure 2).

Conformément au premier mode de réalisation de l'invention, le corps 11 et le carter 21 sont venus de matière l'un avec l'autre et forment un seul et même boîtier.

Des premier 26A et second 26B organes d'application d'effort, agencés dans le carter 21 de façon diamétralement opposée par rapport à l'axe de coulissement du piston 12, sont sollicités respectivement par des premier 27A et second 27B organes élastiques.

Les premier 27A et second 27B organes élastiques génèrent des premier et second efforts élastiques ayant respectivement des première et seconde composantes opposées transversales à la direction de déplacement du piston 12.

Chaque organe 26A, 26B d'application d'effort coopère avec l'organe 22 de renvoi d'effort par effet de came de façon à transformer le déplacement de cet organe 26A, 26B sous l'effet de sa sollicitation élastique en déplacement du piston 12 dans le sens prédéterminé 17.

Les organes élastiques 27A, 27B sont choisis de manière à générer des efforts élastiques suffisants pour assurer une assistance efficace au déplacement du piston 12. On notera cependant que ces organes élastiques 27A, 27B ne doivent pas opposer une résistance trop grande au rappel du piston 12 vers sa position d'attente.

Conformément au premier mode de réalisation de l'invention, les premier 27A et second 27B organes élastiques sont des ressorts de compression hélicoïdaux 27A, 27B d'axes sensiblement transversaux à la direction de déplacement du piston 12. Chaque ressort de compression 27A, 27B est en appui entre une face interne du carter 21 et un organe d'application d'effort 26A, 26B correspondant.

Les premiers 26A et second 26B organes d'application d'effort sont donc reliés, par l'intermédiaire des premier 27A et second 27B ressorts de compression, à un support commun 28 formé par le carter 21.

De préférence, l'organe de renvoi 22 est muni de première 22A et seconde 22B surfaces de came et les premier 26A et second 26B organes d'application d'effort comportent respectivement des premier 29A et second 29B galets coopérant avec ces première 22A et seconde 22B surfaces.

Les galets 29A, 29B permettent de limiter les frottements entre les organes 26A, 26B d'application d'effort et l'organe de renvoi 22.

Les premier 26A et second 26B organes d'application d'effort comportent respectivement des premier 34A et second 34B galets de réaction coopérant avec une surface interne 36 du carter 21 formant surface de réaction. Cette surface de réaction 36, fixe par rapport au piston et aux organes d'application d'effort 26A, 26B, s'oppose au déplacement de ces organes 26A, 26B dans un sens opposé au sens prédéterminé 17.

On notera que, dans l'exemple illustré, chaque surface de came 22A, 22B comprend une face parallèle à la direction de déplacement du piston 12 prolongée longitudinalement par une rampe. Les rampes des surfaces de came 22A, 22B convergent vers la surface de réaction 36.

Comme on peut le voir sur la figure 1, les faces parallèles des surfaces de came 22A, 22B délimitent une extrémité axiale de l'organe de renvoi 22, appelée extrémité d'attente 41, telle que lorsque les organes d'application d'effort 26A, 26B coopèrent avec les faces parallèles, l'effet de came est annulé. En effet, lorsque le piston 12 est dans sa position d'attente telle que représentée sur la figure 1, les galets 29A, 29B d'application d'effort coopèrent avec les faces parallèles de l'extrémité d'attente 41 de l'organe de renvoi 22 sans provoquer de déplacement du piston 12.

De préférence, les galets d'application d'effort 29A, 29B et de réaction 34A, 34B sont montés rotatifs sur les organes 26A, 26B d'application d'effort au moyen de roulements à billes ou à rouleaux ou de paliers lisses.

De préférence également, les galets d'application d'effort 29A, 29B et de réaction 34A, 34B portés par un même organe 26A, 26B d'application d'effort sont montés rotatifs sur cet organe 26A, 26B autour d'axes respectifs perpendiculaires à la direction de déplacement du piston et coplanaires dans un plan parallèle à cette direction de déplacement du piston.

Conformément au premier mode de réalisation de l'invention, le support 28 est solidaire du carter 21 (ce support 28 est donc fixe transversalement par rapport au piston 12) alors que l'organe de renvoi 22 est monté avec un jeu transversal sur la tige 24 du piston 12.

L'organe de renvoi 22 est en appui roulant ou glissant contre une paroi transversale 38 solidaire de la tige 24 de piston 12. Cette paroi 38 forme des moyens 38 de guidage transversal de l'organe de renvoi 22 par rapport à la tige 24. Des moyens 40 de limitation de frottement, par exemple des moyens de roulement (tels que ceux représentés sur la figure 1) ou de glissement sont intercalés entre l'organe de renvoi 22 et la paroi 38.

Du fait du jeu transversal de l'organe de renvoi 22 par rapport à la tige 24, tout déséquilibre des composantes transversales des efforts élastiques générés par les premier 27A et second 27B ressorts d'assistance déplace automatiquement l'organe de renvoi 22, transversalement à la direction de déplacement du piston 12, vers une position d'équilibre dans laquelle les composantes transversales des efforts élastiques se compensent. On limite de cette façon les frottements entre le corps 11 et le piston 12, ainsi que les frottements entre la tige 24 du piston 12 et l'organe de guidage axial 25.

Comme cela est plus particulièrement visible sur la figure 2, un joint d'étanchéité annulaire 42, traversé par la tige 24 de piston, isole le carter 21 de la seconde chambre 14B du corps 11. Dans l'exemple illustré, le joint 42 forme une butée de fin course du piston 12 en coopérant par exemple avec la paroi transversale 38.

Sur les figures suivantes, les éléments analogues à ceux des figures 1 et 2 sont désignés par des références identiques.

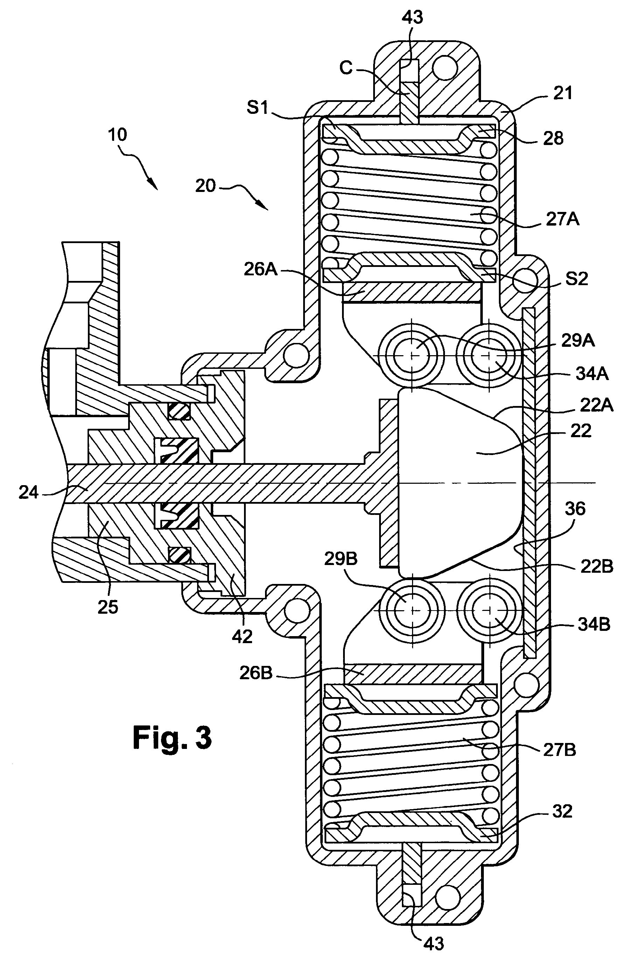

On a représenté sur la figure 3 un dispositif d'assistance 20 selon un deuxième mode de réalisation de l'invention.

Dans ce deuxième mode de réalisation, l'organe de renvoi 22 est solidaire de la tige 24 du piston 12 alors que le support commun 28 est mobile transversalement par rapport à la direction de déplacement du piston 12. Ainsi, les premier 26A et second 26B organes d'application d'effort sont reliés, par l'intermédiaire des premier 27A et second 27B ressorts de compression, à un support commun 28 mobile par rapport au carter 21.

Le support commun 28 comprend un cadre C muni de deux grands côtés parallèles aux axes des ressorts 27A, 27B et de deux petits côtés formant des appuis pour ces ressorts 27A, 27B.

Chaque ressort 27A, 27B est en appui sur des premier S1 et second S2 sièges en forme de coupelles.

Le premier siège S1 est solidaire de l'organe d'application d'effort 26A, 26B correspondant. Le second siège S2 est solidaire du petit coté correspondant du cadre C.

L'ensemble comprenant le support 28, plus particulièrement le cadre C, ainsi que les organes d'application d'effort 26A, 26B et les ressorts 27A, 27B, est guidé transversalement par coopération des galets de réaction 34A, 34B avec la surface de réaction 36.

Le cadre C est logé dans des rainures 43 du carter 21 qui peuvent participer au positionnement transversal du support 28 dans la position d'attente du piston 12.

Du fait que l'organe de renvoi 22 est fixe transversalement et que le support 28 est mobile transversalement par rapport à la tige 24, tout déséquilibre des composantes transversales des efforts élastiques générés par les premier 27A et second 27B ressorts d'assistance déplace automatiquement le support 28, transversalement à la direction de déplacement du piston 12, vers une position d'équilibre dans laquelle les composantes transversales des efforts élastiques se compensent. On limite ainsi les frottements entre le corps 11 et le piston 12.

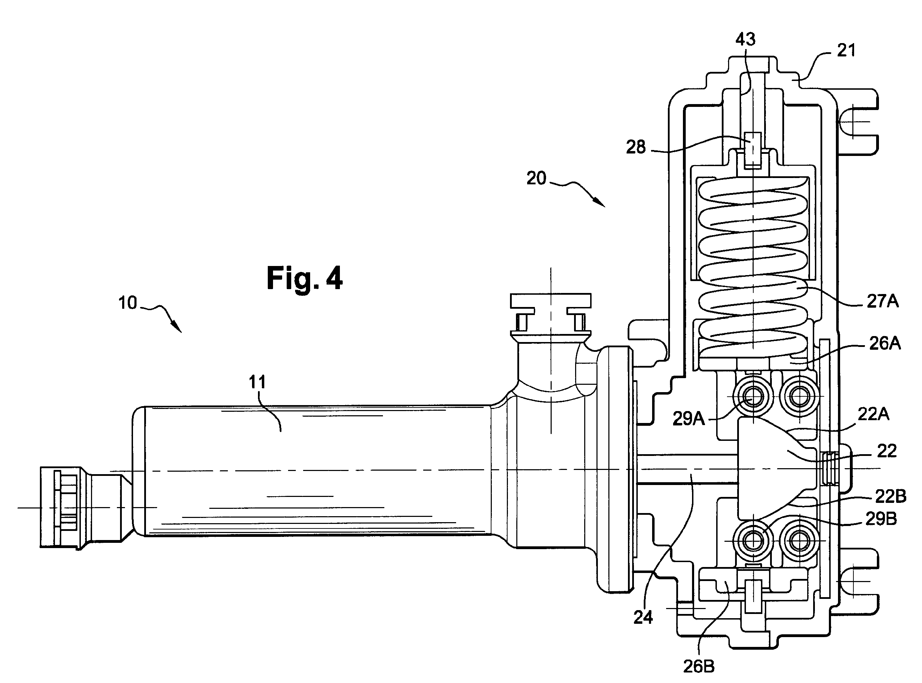

On a représenté sur la figure 4 un dispositif d'assistance 20 selon un troisième mode de réalisation de l'invention.

Dans ce cas, à la différence du deuxième mode de réalisation de l'invention, le dispositif d'assistance 20 ne comporte qu'un seul ressort 27A en appui entre le support commun 28, mobile transversalement, et le premier organe d'application d'effort 26A. En effet, le second organe d'application d'effort 26B est solidaire du support commun 28. Les premier 26A et second 26B organes d'application d'effort sont donc sollicités respectivement par des premier et second efforts élastiques générés par le seul ressort 27A.

On notera que ce mode de réalisation à un seul ressort d'assistance est plus économique que le précédent mode de réalisation à deux ressorts d'assistance, mais procure généralement un effort d'assistance moins important.

En variante, le support commun 28 pourrait être fixe (solidaire du carter 21), l'organe de renvoi 22 étant dans ce cas mobile transversalement par rapport à la tige 24.

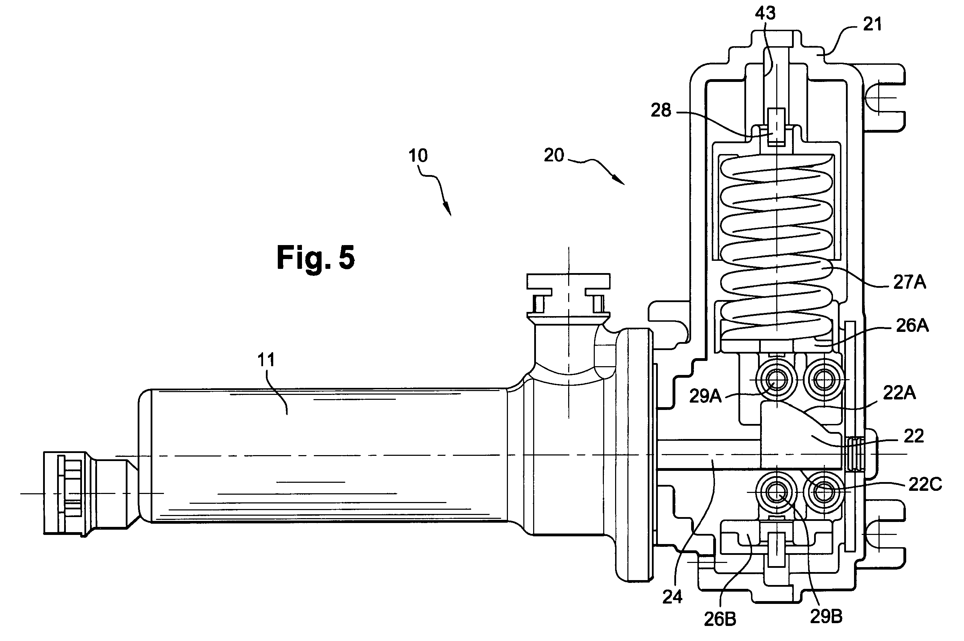

On a représenté sur la figure 5 un dispositif d'assistance selon un quatrième mode de réalisation de l'invention.

Dans ce cas, à la différence du troisième mode de réalisation de l'invention, l'organe 26B d'application d'effort ne coopère pas avec l'organe 22 de renvoi d'effort par effet de came. En effet, le galet 29B porté par l'organe 26B d'application d'effort coopère avec une face 22C, parallèle à la direction de déplacement du piston 12, formant une face de guidage axial de l'organe de renvoi 22.

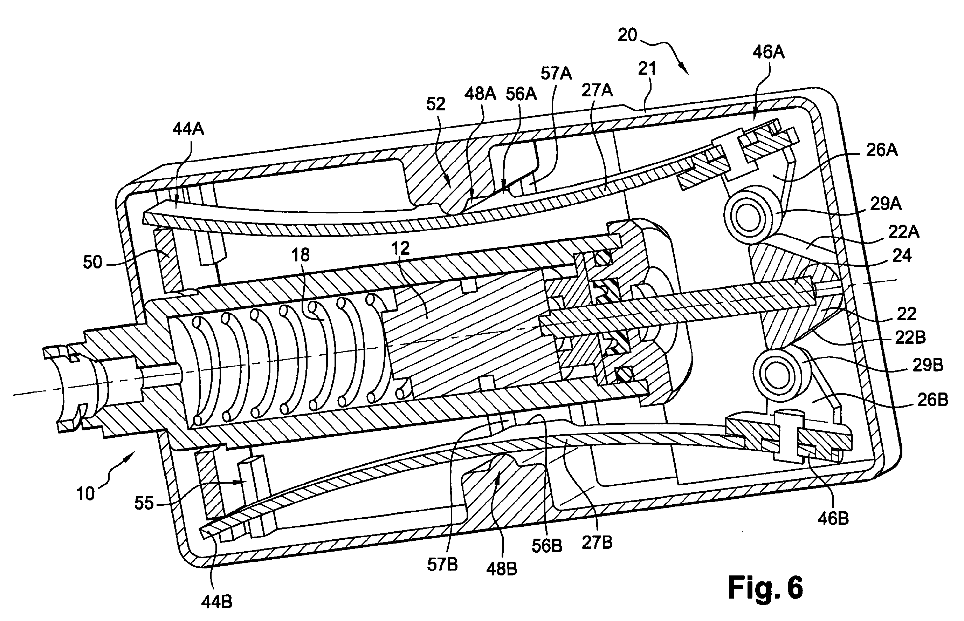

On a représenté sur la figure 6 un dispositif d'assistance 20 selon un cinquième mode de réalisation de l'invention.

Dans ce cas, à la différence des modes de réalisation précédents, le carter 21 du dispositif d'assistance 20 forme un logement pour le corps 11 du cylindre d'assistance.

Par ailleurs, à la différence des modes de réalisation précédents, les organes élastiques 27A, 27B sont des ressorts à lame, de type à lame simple ou à lames empilées. De préférence, les ressorts à lame 27A, 27B ont subit, avant montage, un traitement de surface afin d'améliorer leurs caractéristiques mécaniques, plus particulièrement leur raideur ou leur résistance aux frottements.

Les organes élastiques 27A, 27B sont agencés dans le carter 21 de façon diamétralement opposée par rapport à l'axe de coulissement du piston 12.

Les organes élastiques 27A, 27B comportent chacun des première 44A, 44B et seconde 46A, 46B extrémités et une partie centrale 48A, 48B.

Les premières extrémités 44A, 44B de chaque ressort à lame 27A, 27B sont liées par appui à un premier support commun 50 qui, conformément au cinquième mode de réalisation, est mobile transversalement par rapport à la direction de déplacement du piston 12.

Les secondes extrémités 46A, 46B de chaque ressort à lame 27A, 27B sont liées à l'organe d'application d'effort 26A, 26B correspondant, généralement par encliquetage ou par rivetage.

Enfin, les parties centrales de chaque ressort à lame 27A, 27B sont liées par appui à un second support commun 52 qui, conformément au cinquième mode de réalisation, est solidaire du carter 21. En effet, le support commun 52 est venu de matière avec le carter 21.

Le carter 21 comporte des moyens 55 de guidage transversal du premier support 50. De préférence, ces moyens de guidage 55 comportent des moyens de roulement ou des moyens de glissement afin de limiter les frottements entre le premier support 50 et le carter 21

Les ressorts à lame 27A, 27B sont positionnés axialement (parallèlement à la direction de déplacement du piston) dans le carter 21 à l'aide de butées complémentaires 56A, 56B, 57A, 57B ménagées, d'une part, sur ces ressorts 27A, 27B et, d'autre part, sur le carter 21 ou le support 52.

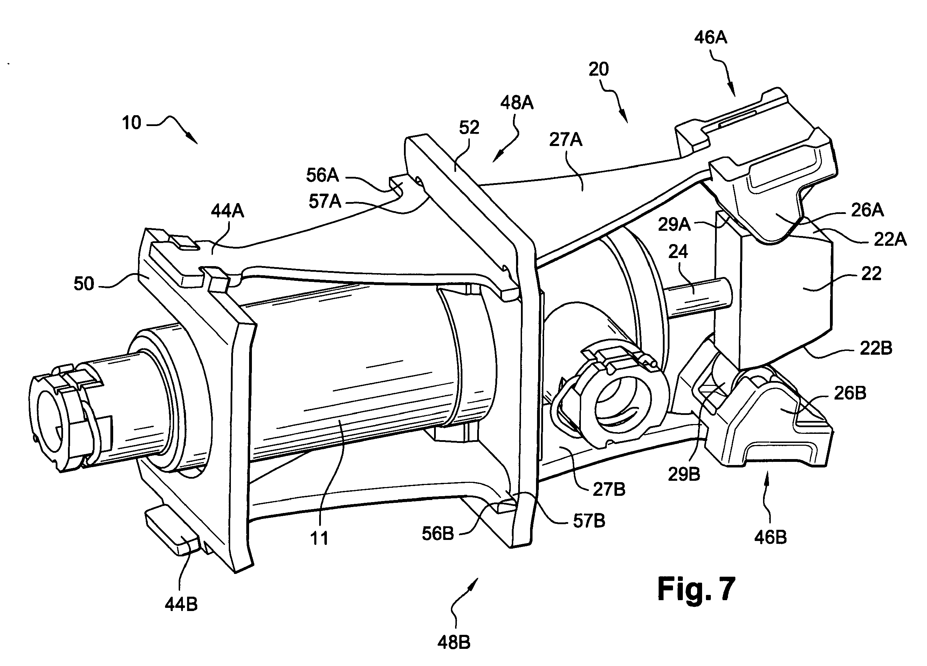

On a représenté sur la figure 7 un dispositif d'assistance 20 selon un sixième mode de réalisation de l'invention.

Dans ce cas, à la différence du cinquième mode de réalisation de l'invention, le second support commun 52 est rapporté sur le carter 21.

Dans l'exemple illustré sur la figure 7, le premier support commun 50 est mobile transversalement par rapport à la direction de déplacement du piston 12 alors que le second support commun 52 est solidaire du carter 21.

En variante, le premier support commun 50 pourrait être solidaire du carter 21, le second support commun 52 étant dans ce cas mobile transversalement par rapport à la direction de déplacement du piston 12.

Selon ce sixième mode de réalisation, les butées 56A, 56B ménagées sur les ressorts ont des formes sensiblement bombées afin que le contact entre chaque butée 56A, 56B et la butée complémentaire 57A, 57B ménagée sur le support 52 soit sensiblement limité à une génératrice. Les butées 56A, 56B, 57A, 57B présentent alors des zones de contact sensiblement linéaires.

Ainsi, chaque ressort 27A, 27B est articulé autour d'une telle zone de contact linéaire et est également en butée axiale contre le support commun 52 par cette même zone de contact linéaire.

L'articulation et la butée axiale étant réalisées sur la même zone linéaire, on limite ainsi les frottements entre les ressorts 27A, 27B et le second support commun 52.

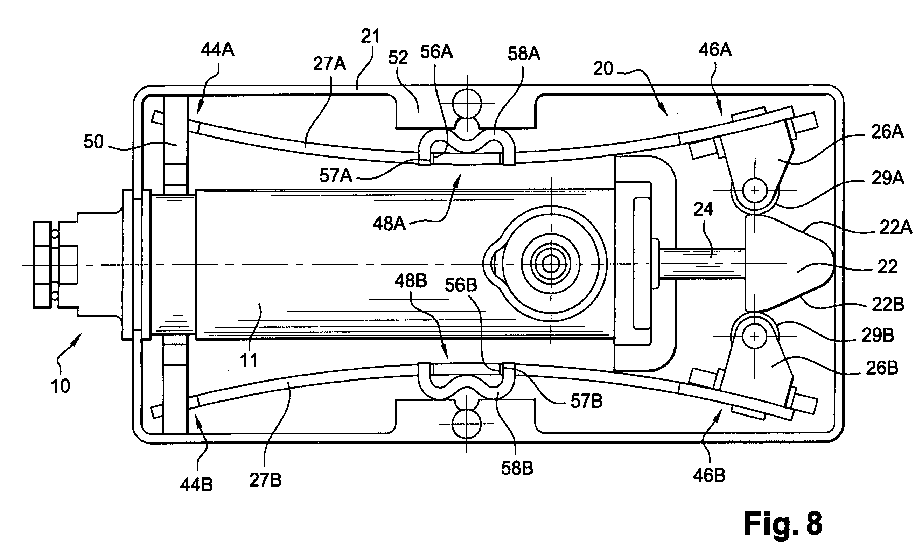

On a représenté sur la figure 8 un dispositif d'assistance 20 selon un septième mode de réalisation de l'invention.

Dans ce cas, à la différence du cinquième mode de réalisation de l'invention, la partie centrale 48A, 48B de chaque organe élastique 27A, 27B prend appui sur le second support commun 52 solidaire du carter 21 par l'intermédiaire d'un organe d'articulation 58A, 58B intercalé entre l'organe élastique 27A, 27B et le support commun 52.

Les butées 56A, 56B, 57A, 57B de positionnement axial des ressorts 27A, 27B sont ménagées sur ces ressorts 27A, 27B et les organes d'articulation 58A, 58B.

Le cas échéant, les organes d'articulation 58A, 58B peuvent glisser axialement (parallèlement à la direction de déplacement du piston) sur des faces correspondantes ménagées sur le second support commun 52.

On notera que l'invention n'est pas limitée aux modes de réalisation précédemment décrits.

En effet, on pourrait notamment combiner des caractéristiques de plusieurs modes de réalisation sans pour autant sortir du cadre de l'invention.

## Revendications

1. Dispositif (20), pour système de commande d'embrayage de véhicule automobile, pour l'assistance au déplacement axial dans un sens prédéterminé (17) d'un moyen d'actionnement (12), ce dispositif (20) étant du type comprenant un organe (22) de renvoi d'effort lié axialement avec le moyen d'actionnement (12) et des premier (28A) et second (26B) organes d'application d'effort appliquant des premier et second efforts élastiques sur l'organe de renvoi (22), et où les premier (26A) et second (26B) organes d'application d'effort sont reliés à un support commun (28 ; 50 ; 52), ces premier et second efforts élastiques comportant respectivement des première et seconde composantes opposées transversales à la direction de déplacement du moyen d'actionnement (12), dans lequel les premier et second efforts élastiques sont créés par au moins un premier organe élastique (27A, 27B) reliant le premier organe (26A, 26B) d'application d'effort au support (28 ; 50 ; 52) **caractérisé en ce que** un élément choisi parmi l'organe de renvol (22) et le support (29 ; 50: 52) est mobile en translation transversalement par rapport au moyen d'actionnement (12).

2. Dispositif d'assistance (20) selon la revendication 1, **caractérisé en ce que** le premier organe d'application d'effort (26A) coopère avec organe de renvoi (22) par effet de came de façon à transformer un déplacement du premier organe d'application (26A) en déplacement du moyen d'actionnement (12) dans le sens prédéterminé (17).

3. Dispositif d'assistance (20) selon la revendication 2, **caractérisé en ce que** les premier (26A) et second (26B) organes d'application d'effort coopèrent chacun avec l'organe de renvoi (22) par effet de came de façon à transformer chaque déplacement d'organe d'application (26A, 26B) en déplacement du moyen d'actionnement (12) dans le sens prédéterminé (17).

4. Dispositif d'assistance (20) selon la revendication 2 ou 3, **caractérisé en ce que** l'organe de renvoi (22) comporte une extrémité axiale d'attente (41) telle que lorsque les organes d'application d'effort (26A, 26B) coopèrent avec cette extrémité d'attente (41), effet de came est annulé.

5. Dispositif d'assistance (20) selon l'une quelconque des revendications 1 à 4, **caractérisé en ce que** les premier et second efforts élastiques sont créés par le premier organe élastique (27A) reliant le premier organe d'application (26A) au support (28 ; 50, 52) et un second organe élastique (27B) reliant le second organe d'application (26B) au support (28 ; 50, 52).

6. Dispositif d'assistance (20) selon l'une quelconque des revendications 1 à 5, **caractérisé en ce que** l'organe de renvoi (22) est monté avec un jeu transversal sur une tige (24) du moyen d'actionnement (12) et le support (28 ; 50, 52) est fixe transversalement par rapport au moyen d'actionnement (12).

7. Dispositif d'assistance (20) selon la revendication 6, **caractérisé en ce qu'**il comporte des moyens (38) de guidage transversal de l'organe de renvoi (22) par rapport à la tige (24) du moyen d'actionnement (12), ces moyens de guidage transversal (38) comportant des moyens (40) de limitation de frottements, par exemple des moyens de roulement ou des moyens de glissement.

8. Dispositif d'assistance (20) selon l'une quelconque des revendications 1 à 5, **caractérisé en ce que** le support (28 ;50, 52) est mobile transversalement par rapport au moyen d'actionnement (12) et l'organe de renvoi (22) est fixe transversalement par rapport au moyen d'actionnement (12).

9. Dispositif d'assistance (20) selon l'une quelconque des revendications précédentes, **caractérisé en ce qu'**au moins l'un des organes (26A, 26B) d'application d'effort comporte un galet (29A, 29B) d'application d'effort coopérant avec l'organe de renvoi (22).

10. Dispositif d'assistance (20) selon l'une quelconque des revendications précédentes, **caractérisé en ce qu'**au moins l'un des organes d'application d'effort (26A, 26B) comporte un galet de réaction (34A, 34B) coopérant avec une surface de réaction (36) pour s'opposer au déplacement de cet organe d'application d'effort (26A, 26B) dans un sens opposé au sens prédéterminé (17).

11. Dispositif d'assistance (20) selon les revendications 8 et 10 prises ensemble, **caractérisé en ce qu'**un ensemble comprenant le support (28), les organes d'application d'effort (26A, 26B) et chaque organe élastique (27A, 27B) est guidé transversalement par coopération de chaque galet de réaction (34A, 34B) avec la surface de réaction (36).

12. Dispositif d'assistance (20) selon les revendications 10 et 11 prises ensemble, **caractérisé en ce que** les galets d'application d'effort (29A, 29B) et de réaction (34A, 34B) sont montés pivotant autour d'axes perpendiculaires à la direction de déplacement du moyen d'actionnement (12) et coplanaires dans un plan parallèle à cette direction de déplacement du moyen d'actionnement (12).

13. Dispositif d'assistance (20) selon l'une quelconque des revendications 1 à 12, **caractérisé en ce que** le premier organe élastique (27A, 27B) est un ressort de compression en appui entre le support (28) et le premier organe d'application d'effort (26A, 26B).

14. Dispositif d'assistance (20) selon l'une quelconque des revendications 1 à 12, **caractérisé en ce que** le premier organe élastique (27A, 27B) est un ressort à lame comportant une première extrémité (44A, 44B) liée à un premier support (50), une seconde extrémité (46A, 46B) liée au premier organe d'application d'effort (26A, 26B), et une partie centrale (48A, 48B) liée à un second support (52).

15. Dispositif d'assistance (20) selon les revendications 8 et 14 prises ensemble, **caractérisé en ce qu'**un support choisi parmi les premier (50) et second (52) supports est mobile transversalement par rapport au moyen d'actionnement (12), et l'autre est fixe transversalement par rapport à ce moyen d'actionnement (12).

16. Dispositif d'assistance (20) selon la revendication 15, **caractérisé en ce que** le second support (52) est fixe par rapport au moyen d'actionnement (12), la partie centrale (48A, 48B) de chaque organe élastique (27A, 27B) prenant appui sur le second support (52) par l'intermédiaire d'un organe d'articulation (58A, 58B) intercalé entre l'organe élastique (27A, 27B) et le second support (52).

17. Dispositif d'assistance (20) selon la revendication 16, **caractérisé en ce que** les organes d'articulation (58A, 58B) peuvent glisser parallèlement à la direction de déplacement du moyen d'actionnement (12) sur des faces correspondantes ménagées sur le second support (52).

18. Dispositif d'assistance (20) selon l'une quelconque des revendications précédentes **caractérisé en ce que** le moyen d'actionnement est un piston (12).

19. Dispositif d'assistance (20) selon l'une quelconque des revendications 1 à 17, **caractérisé en ce que** le moyen d'actionnement est un élément de tringlerie, notamment une tige ou un câble.

20. Ensemble d'assistance pour système de commande hydraulique d'embrayage, notamment de véhicule automobile, du type comprenant un piston (12), et un dispositif (20) d'assistance au déplacement axial de ce piston (12), **caractérisé en ce que** le dispositif d'assistance (20) est selon l'une quelconque des revendications 1 à 19.

21. Ensemble d'assistance selon la revendication 20, **caractérisé en ce que** le piston (12) délimite une chambre émettrice de volume variable.

22. Ensemble d'assistance selon l'une des revendications 20 ou 21, **caractérisé en ce que** le piston (12) délimite une chambre réceptrice de volume variable.

23. Ensemble d'assistance pour système de commande d'embrayage, notamment de véhicule automobile, du type comprenant un élément de tringlerie, notamment une tige ou un câble, et un dispositif (20) d'assistance au déplacement axial de cet élément de tringlerie, **caractérisé en ce que** le dispositif d'assistance (20) est selon l'une quelconque des revendications 1 à 19.

## Claims

1. Device (20) for a motor vehicle clutch control system, for assisting the axial movement of an actuation means (12) in a predetermined direction (17), this device (20) being of the type comprising a force return member (22) axially connected with the actuation means (12) and first (26A) and second (26B) force application members applying first and second elastic forces to the return member (22), and where the first (26A) and second (26B) force application members are connected to a common support (28; 50; 52), these first and second elastic forces comprising respectively first and second opposite components transverse to the direction of movement of the actuation means (12), wherein the first and second elastic forces are created by at least one first elastic member (27A, 27B) connecting the first force application member (26A, 26B) to the support (28; 50; 52), **characterised in that** an element chosen from the return member (22) and the support (28; 50; 52) is able to move in translation transversely with respect to the actuation means (12).

2. Assistance device (20) according to claim 1, **characterised in that** the first force application member (26A) cooperates with the return member (22) by cam effect so as to transform a movement of the first application member (26A) into a movement of the actuation means (12) in the predetermined direction (17).

3. Assistance device (20) according to claim 2, **characterised in that** the first (26A) and second (26B) force application members each cooperate with the return member (22) by cam effect so as to transform each movement of an application member (26A, 26B) into a movement of the actuation means (12) in the predetermined direction (17).

4. Assistance device (20) according to claim 2 or 3, **characterised in that** the return member (22) comprises an axial waiting end (41) such that, when the force application members (26A, 26B) cooperate with this waiting end (41), the cam effect is cancelled out.

5. Assistance device (20) according to any one of claims 1 to 4, **characterised in that** the first and second elastic forces are created by the first elastic member (27A) connecting the first application member (26A) to the support (28; 50, 52) and a second elastic member (27B) connecting the second application member (26B) to the support (28; 50, 52).

6. Assistance device (20) according to any one of claims 1 to 5, **characterised in that** the return member (22) is mounted with transverse clearance on a rod (24) of the actuation means (12) and the support (28; 50, 52) is fixed transversely with respect to the actuation means (12).

7. Assistance device (20) according to claim 6, **characterised in that** it comprises means (38) for the transverse guidance of the return member (22) with respect to the rod (24) of the actuation means (12), these transverse guidance means (38) comprising friction limitation means (40), for example rolling means or sliding means.

8. Assistance device (20) according to any one of claims 1 to 5, **characterised in that** the support (28; 50, 52) is able to move transversely with respect to the actuation means (12) and the return member (22) is fixed transversely with respect to the actuation means (12).

9. Assistance device (20) according to any one of the preceding claims, **characterised in that** at least one of the force application members (26A, 26B) comprises a force application roller (29A, 29B) cooperating with the return member (22).

10. Assistance device (20) according to any one of the preceding claims, **characterised in that** at least one of the force application members (26A, 26B) comprises a reaction roller (34A, 34B) cooperating with a reaction surface (36) in order to oppose the movement of this force application member (26A, 26B) in a direction opposite to the predetermined direction (17).

11. Assistance device (20) according to claims 8 and 10 taken together, **characterised in that** an assembly comprising the support (28), the force application members (26A, 26B) and each elastic member (27A, 27B) is guided transversely by cooperation of each reaction roller (34A, 24B) with the reaction surface (36).

12. Assistance device (20) according to claims 10 and 11 taken together, **characterised in that** force (29A, 29B) and reaction (34A, 34B) application rollers are mounted so as to pivot about axes perpendicular to the direction of movement of the actuation means (12) and coplanar in a plane parallel to this direction of movement of the actuation means (12).

13. Assistance device (20) according to any one of claims 1 to 12, **characterised in that** the first elastic member (27A, 27B) is a compression spring in abutment between the support (28) and the first force application member (26A, 26B).

14. Assistance device (20) according to any one of claims 1 to 12, **characterised in that** the first elastic member (27A, 27B) is a leaf spring comprising a first end (44A, 44B) connected to a first support (50), a second end (46A, 46B) connected to the first force application member (26A, 26B) and a central part (48A, 48B) connected to a second support (52).

15. Assistance device (20) according to claims 8 and 14 taken together, **characterised in that** a support chosen from amongst the first (50) and second (52) supports is able to move transversely with respect to the actuation means (12), and the other is fixed transversely with respect to this actuation means (12).

16. Assistance device (20) according to claim 15, **characterised in that** the second support (52) is fixed with respect to the actuation means (12), the central part (48A, 48B) of each elastic member (27A, 27B) bearing on the second support (52) by means of an articulation member (58A, 58B) interposed between the elastic member (27A, 27B) and the second support (52).

17. Assistance device (20) according to claim 16, **characterised in that** the articulation members (58A, 58B) can slide parallel to the direction of movement of the actuation means (12) on corresponding faces provided on the second support (52).

18. Assistance device (20) according to any one of the preceding claims, **characterised in that** the actuation means is a piston (12).

19. Assistance device (20) according to any one of claims 1 to 17, **characterised in that** the actuation means is a linkage element, in particular a rod or cable.

20. Assistance assembly for a hydraulic clutch control system, in particular for a motor vehicle, of the type comprising a piston (12), and a device (20) for assisting the axial movement of this piston (12), **characterised in that** the assistance device (20) is in accordance with any one of claims 1 to 19.

21. Assistance assembly according to claim 20, **characterised in that** the piston (12) delimits a sending chamber of variable volume.

22. Assistance assembly according to one of claims 20 or 21, **characterised in that** the piston (12) delimits a receiving chamber of variable volume.

23. Assistance assembly for a clutch control system, in particular for a motor vehicle, of the type comprising a linkage element, in particular a rod or cable, and a device (20) for assisting the axial movement of this linkage element, **characterised in that** the assistance device (20) is in accordance with any one of claims 1 to 19.

## Patentansprüche

1. Vorrichtung (20), für ein System zur Betätigung einer Kraftfahrzeugkupplung, zur Unterstützung der axialen Verschiebung eines Betätigungsmittels (12) in einer vorbestimmten Richtung (17), wobei diese Vorrichtung (20) ein Kraftumlenkungsorgan (22), das axial mit dem Betätigungsmittel (12) verbunden ist, sowie ein erstes (26A) und ein zweites (26B) Kraftanlegeorgan umfasst, die eine erste und eine zweite elastische Kraft an das Umlenkungsorgan (22) anlegen, wobei das erste (26A) und das zweite (26B) Kraftanlegeorgan mit einer gemeinsamen Stütze (28; 50; 52) verbunden sind, wobei diese erste und zweite elastische Kraft eine erste und zweite einander entgegengesetzte, quer zur Verschiebungsrichtung des Betätigungsmittels (12) verlaufende Komponente umfassen, wobei die erste und die zweite elastische Kraft durch mindestens ein erstes elastisches Organ (27A, 27B) erzeugt werden, das das erste Kraftanlegeorgan (26A, 26B) mit der Stütze (28; 50; 52) verbindet, **dadurch gekennzeichnet, dass** ein zwischen dem Umlenkungsorgan (22) und der Stütze (28; 50; 52) ausgewähltes Element quer zum Betätigungsmittel (12) translatorisch beweglich ist.

2. Unterstützungsvorrichtung (20) nach Anspruch 1, **dadurch gekennzeichnet, dass** das erste Kraftanlegeorgan (26A) durch Nockenwirkung mit dem Umlenkungsorgan (22) zusammenwirkt, um eine Verschiebung des ersten Kraftanlegeorgans (26A) in eine Verschiebung des Betätigungsmittels (12) in der vorbestimmten Richtung (17) umzuwandeln.

3. Unterstützungsvorrichtung (20) nach Anspruch 2, **dadurch gekennzeichnet, dass** das erste (26A) und das zweite (26B) Kraftanlegeorgan jeweils durch Nockenwirkung mit dem Umlenkungsorgan (22) zusammenwirken, um jede Verschiebung des Kraftanlegeorgans (26A, 26B) in eine Verschiebung des Betätigungsmittels (12) in der vorbestimmten Richtung (17) umzuwandeln.

4. Unterstützungsvorrichtung (20) nach Anspruch 2 oder 3, **dadurch gekennzeichnet, dass** das Umlenkungsorgan (22) ein axiales Warteende (41) aufweist, so dass beim Zusammenwirken der Kraftanlegeorgane (26A, 26B) mit diesem Warteende (41) die Nockenwirkung aufgehoben wird.

5. Unterstützungsvorrichtung (20) nach einem der Ansprüche 1 bis 4, **dadurch gekennzeichnet, dass** die erste und zweite elastische Kraft durch das das erste Kraftanlegeorgan (26A) mit der Stütze (28; 50, 52) verbindende erste elastische Organ (27A) und durch ein das zweite Kraftanlegeorgan (26B) mit der Stütze (28; 50, 52) verbindendes zweites elastisches Organ (27B) erzeugt werden.

6. Unterstützungsvorrichtung (20) nach einem der Ansprüche 1 bis 5, **dadurch gekennzeichnet, dass** das Umlenkungsorgan (22) mit einem quer ausgerichteten Spiel an einer Stange (24) des Betätigungsmittels (12) angebracht und die Stütze (28; 50, 52) im Verhältnis zum Betätigungsmittel (12) quer unbeweglich befestigt ist.

7. Unterstützungsvorrichtung (20) nach Anspruch 6, **dadurch gekennzeichnet, dass** sie Mittel (38) zur Querführung des Umlenkungsorgans (22) im Verhältnis zur Stange (24) des Betätigungsmittels (12) umfasst, wobei diese Querführungsmittel (38) Mittel (40) zur Reibungsbegrenzung, zum Beispiel Wälzmittel oder Gleitmittel, aufweisen.

8. Unterstützungsvorrichtung (20) nach einem der Ansprüche 1 bis 5, **dadurch gekennzeichnet, dass** die Stütze (28; 50, 52) im Verhältnis zum Betätigungsmittel (12) quer beweglich und das Umlenkungsorgan (22) im Verhältnis zum Betätigungsmittel (12) quer unbeweglich gelagert ist.

9. Unterstützungsvorrichtung (20) nach einem der vorangehenden Ansprüche, **dadurch gekennzeichnet, dass** mindestens eines der Kraftanlegeorgane (26A, 26B) eine Kraftanlegerolle (29A, 29B) umfasst, die mit dem Umlenkungsorgan (22) zusammenwirkt.

10. Unterstützungsvorrichtung (20) nach einem der vorangehenden Ansprüche, **dadurch gekennzeichnet, dass** mindestens eines der Kraftanlegeorgane (26A, 26B) eine Reaktionsrolle (34A, 34B) aufweist, die mit einer Reaktionsfläche (36) zusammenwirkt, um der Verschiebung dieses Kraftanlegeorgans (26A, 26B) in einer der vorbestimmten Richtung (17) entgegengesetzten Richtung entgegenzuwirken.

11. Unterstützungsvorrichtung (20) nach den Ansprüchen 8 und 10 zusammengenommen, **dadurch gekennzeichnet, dass** eine die Stütze (28), die Kraftanlegeorgane (26A, 26B) und jedes elastische Organ (27A, 27B) umfassende Baueinheit durch Zusammenwirken jeder Reaktionsrolle (34A, 34B) mit der Reaktionsfläche (36) in Querrichtung geführt wird.

12. Unterstützungsvorrichtung (20) nach den Ansprüchen 10 und 11 zusammengenommen, **dadurch gekennzeichnet, dass** die Kraftanlegerollen (29A, 29B) und Reaktionsrollen (34A, 34B) schwenkbar um Achsen gelagert sind, die senkrecht zur Verschiebungsrichtung des Betätigungsmittels (12) und koplanar in einer zur dieser Verschiebungsrichtung des Betätigungsmittels (12) parallelen Ebene verlaufen.

13. Unterstützungsvorrichtung (20) nach einem der Ansprüche 1 bis 12, **dadurch gekennzeichnet, dass** das erste elastische Organ (27A, 27B) eine Druckfeder ist, die zwischen der Stütze (28) und dem ersten Kraftanlegeorgan (26A, 26B) zur Anlage kommt.

14. Unterstützungsvorrichtung (20) nach einem der Ansprüche 1 bis 12, **dadurch gekennzeichnet, dass** das erste elastische Organ (27A, 27B) eine Blattfeder ist, die ein mit einer ersten Stütze (50) verbundenes erstes Ende (44A, 44B), ein mit dem ersten Kraftanlegeorgan (26A, 26B) verbundenes zweites Ende (46A, 46B) und einen mit einer zweiten Stütze (52) verbundenen mittleren Teil (48A, 48B) umfasst.

15. Unterstützungsvorrichtung (20) nach den Ansprüchen 8 und 14 zusammengenommen, **dadurch gekennzeichnet, dass** eine zwischen der ersten (50) und der zweiten (52) Stütze ausgewählte Stütze im Verhältnis zum Betätigungsmittel (12) quer beweglich und die andere im Verhältnis zu diesem Betätigungsmittel (12) quer unbeweglich gelagert ist.

16. Unterstützungsvorrichtung (20) nach Anspruch 15, **dadurch gekennzeichnet, dass** die zweite Stütze (52) im Verhältnis zum Betätigungsmittel (12) unbeweglich gelagert ist, wobei der mittlere Teil (48A, 48B) jedes elastischen Organs (27A, 27B) über ein zwischen dem elastischen Organ (27A, 27B) und der zweiten Stütze (52) eingefügtes Gelenkorgan (58A, 58B) an der zweiten Stütze (52) anliegt.

17. Unterstützungsvorrichtung (20) nach Anspruch 16, **dadurch gekennzeichnet, dass** die Gelenkorgane (58A, 58B) parallel zur Verschiebungsrichtung des Betätigungsmittels (12) auf entsprechenden Flächen gleiten können, die an der zweiten Stütze (52) ausgebildet sind.

18. Unterstützungsvorrichtung (20) nach einem der vorangehenden Ansprüche, **dadurch gekennzeichnet, dass** das Betätigungsmittel ein Kolben (12) ist.

19. Unterstützungsvorrichtung (20) nach einem der Ansprüche 1 bis 17, **dadurch gekennzeichnet , dass** das Betätigungsmittel ein Gestängeelement, insbesondere eine Stange oder ein Seil, ist.

20. Unterstützungsanordnung für ein System zur hydraulischen Betätigung einer Kupplung, insbesondere für Kraftfahrzeuge, die einen Kolben (12) und eine Vorrichtung (20) zur Unterstützung der axialen Verschiebung dieses Kolbens (12) umfasst, **dadurch gekennzeichnet, dass** die Unterstützungsvorrichtung (20) nach einem der Ansprüche 1 bis 19 ausgeführt ist.

21. Unterstützungsanordnung nach Anspruch 20, **dadurch gekennzeichnet, dass** der Kolben (12) eine Geberkammer mit veränderlichem Volumen begrenzt.

22. Unterstützungsanordnung nach einem der Ansprüche 20 oder 21, **dadurch gekennzeichnet, dass** der Kolben (12) eine Nehmerkammer mit veränderlichem Volumen begrenzt.

23. Unterstützungsanordnung für ein System zur Betätigung einer Kupplung, insbesondere für Kraftfahrzeuge, das ein Gestängeelement, insbesondere eine Stange oder ein Seil, und eine Vorrichtung (20) zur Unterstützung der axialen Verschiebung dieses Gestängeelements umfasst, **dadurch gekennzeichnet, dass** die Unterstützungsvorrichtung (20) nach einem der Ansprüche 1 bis 19 ausgeführt ist.
